## Europäisches Patentamt

## European Patent Office

## Office européen des brevets

(19)

(11) **EP 1 082 775 B1**

(12) # FASCICULE DE BREVET EUROPEEN

(45) Date de publication et mention
de la délivrance du brevet:
**20.02.2002 Bulletin 2002/08**

(51) Int Cl.⁷: **H01M 10/06**, H01M 4/62,
H01M 4/14

(21) Numéro de dépôt: **99920875.4**

(22) Date de dépôt: **29.04.1999**

(86) Numéro de dépôt international:
**PCT/FR99/01022**

(87) Numéro de publication internationale:
**WO 99/57782 (11.11.1999 Gazette 1999/45)**

(54) **ACCUMULATEUR AU PLOMB DE PERFORMANCES AMELIOREES**

BLEIBATTERIE MIT VERBESSERTER LEISTUNG

LEAD BATTERY WITH IMPROVED PERFORMANCE

(84) Etats contractants désignés:
**DE FR GB IT**

(30) Priorité: **30.04.1998 FR 9805509**

(43) Date de publication de la demande:
**14.03.2001 Bulletin 2001/11**

(73) Titulaire: **CENTRE NATIONAL DE LA
RECHERCHE SCIENTIFIQUE
75016 Paris Cédex (FR)**

(72) Inventeurs:
• **ALZIEU, Jean
F-77250 Moret sur Loing (FR)**
• **ROBERT, Jack
F-91120 Palaiseau (FR)**

(74) Mandataire: **Des Termes, Monique et al
Société Brevatome 3, rue du Docteur
Lancereaux
75008 Paris (FR)**

(56) Documents cités:
| | |
|---|---|
| EP-A- 0 070 718 | WO-A-97/30486 |
| WO-A-97/38457 | WO-A-98/43309 |
| DE-A- 3 532 697 | FR-A- 2 425 733 |
| US-A- 5 344 727 | US-A- 5 474 863 |

• LANDFORS J: "CYCLE LIFE TEST OF LEAD
DIOXIDE ELECTRODES IN COMPRESSED
LEAD/ACID CELLS" JOURNAL OF POWER
SOURCES, vol. 52, no. 1, 1 novembre 1994
(1994-11-01), pages 99-108, XP000532794

• PATENT ABSTRACTS OF JAPAN vol. 097, no.
010, 31 octobre 1997 (1997-10-31) -& JP 09
167619 A (MATSUSHITA ELECTRIC IND CO
LTD), 24 juin 1997 (1997-06-24)
• PATENT ABSTRACTS OF JAPAN vol. 014, no.
324 (E-0951), 11 juillet 1990 (1990-07-11) -& JP 02
109263 A (MATSUSHITA ELECTRIC IND CO
LTD), 20 avril 1990 (1990-04-20)
• PATENT ABSTRACTS OF JAPAN vol. 012, no.
124 (E-601), 16 avril 1988 (1988-04-16) -& JP 62
249354 A (JAPAN STORAGE BATTERY CO LTD),
30 octobre 1987 (1987-10-30)
• PATENT ABSTRACTS OF JAPAN vol. 007, no.
154 (E-185), 6 juillet 1983 (1983-07-06) -& JP 58
064772 A (NIHON DENCHI KK), 18 avril 1983
(1983-04-18)
• PATENT ABSTRACTS OF JAPAN vol. 013, no.
534 (E-852), 29 novembre 1989 (1989-11-29) -&
JP 01 220371 A (FURUKAWA BATTERY CO
LTD:THE), 4 septembre 1989 (1989-09-04)
• PATENT ABSTRACTS OF JAPAN vol. 004, no.
112 (E-021), 12 août 1980 (1980-08-12) -& JP 55
069970 A (JAPAN STORAGE BATTERY CO LTD),
27 mai 1980 (1980-05-27)
• OZGUN H ET AL: "Effect of plate preparation on
active-material utilization and cycleability of
positive plates in automotive lead/acid
batteries" JOURNAL OF POWER SOURCES, vol.
52, no. 2, décembre 1994 (1994-12), page 159-171
XP004044621 cité dans la demande

## Description

### Domaine technique

L'invention concerne des accumulateurs au plomb présentant des performances améliorées par rapport aux accumulateurs au plomb actuels.

Des accumulateurs de ce type sont destinés en particulier à la réalisation de batteries performantes, par exemple pour des véhicules électriques.

### Etat de la technique antérieure

Durant la décennie 1970, la recherche de batteries performantes destinées aux véhicules électriques a confirmé un dilemme connu, mais qui frappe particulièrement les accumulateurs au plomb : le choix entre performances massiques et endurance, l'amélioration des unes se faisant au détriment de l'autre. On a parfois privilégié l'énergie massique à un point tel que les durées de vie sont tombées à des valeurs difficilement acceptables. Aussi, des recherches ont été entreprises pour aboutir à un meilleur compromis.

Au cours d'une décharge en 5 heures sous courant constant, l'énergie massique des accumulateurs au plomb destinés aux véhicules électriques est de 30 à 40 Wh/kg. Sur véhicule, ces ordres de grandeurs sont réduits de 20 %. Aussi, aux régimes de décharge en 1 à 2 heures, l'accumulateur au plomb se révèle deux fois moins performant que l'accumulateur nickel-cadmium, et trois fois moins que l'accumulateur sodium-soufre.

Il semblerait donc que l'accumulateur au plomb se place en mauvais rang parmi les candidats au marché des véhicules électriques. Pourtant au-delà de son prix, certaines perspectives plaident en sa faveur.

En effet, ses performances en terme d'autonomie devraient progresser avec l'arrivée de véhicules spécifiques, plus légers et plus économiques en matière d'énergie. Sa durée de vie peut être améliorée grâce à une gestion intelligente de l'énergie. De plus, l'accumulateur au plomb est probablement, parmi les accumulateurs en concurrence pour les nouveaux marchés, celui qui possède la marge de progression relative la plus importante.

Pour améliorer les performances des accumulateurs au plomb, il convient d'augmenter le taux d'utilisation des matériaux actifs des électrodes. Deux voies de recherche peuvent être envisagées pour atteindre ce résultat. L'une d'entre elles concerne la collection des charges du côté des matériaux actifs d'électrode. L'autre concerne une meilleure distribution des réactifs au sein des électrodes.

En effet, le matériau actif des électrodes n'est que fort partiellement utilisé, même au cours d'une décharge dite complète, le pourcentage de matériau transformé étant de l'ordre de 25 à 30 %.

En ce qui concerne la collection des charges, les échanges d'électrons entre le matériau actif et le circuit extérieur sont assurés par des conducteurs en plomb allié en forme de grilles ou de peignes. Les dimensions de ces collecteurs sont déterminées par les deux facteurs suivants : le fait de constituer le support mécanique des électrodes, et la nécessité de résister aux phénomènes de corrosion auxquels ils sont soumis au sein des électrodes. En conséquence, dans la technologie de montage actuelle, dite monopolaire, la masse des collecteurs représente 40 à 50 % de la masse des électrodes pour les applications dans des véhicules électriques.

En ce qui concerne la distribution des réactifs au sein des électrodes, celle-ci est limitée par les porosités d'électrodes susceptibles d'être employées comme on va le voir ci après.

Depuis plus d'un siècle, les plaques d'accumulateurs au plomb sont réalisées par la méthode Fauré dite à grille et oxyde rapporté. Plus précisément, une grille d'alliage de plomb est garnie d'une pâte constituée d'oxyde de plomb, d'acide sulfurique et d'eau. Les proportions de ces divers constituants ont été fixées empiriquement au vu des performances de l'accumulateur. Il est apparu rapidement que l'augmentation de la quantité d'eau, c'est-à-dire de la porosité résultante, accroît la capacité initiale au détriment de la durée de vie. Des valeurs tenues pour acceptables de ces deux paramètres, limitent les variations de porosité à une fourchette étroite, de l'ordre de 10 %.

Au sein d'une électrode d'accumulateur au plomb, la quantité d'acide sulfurique est largement inférieure à la quantité de matière active susceptible d'être oxydée ou réduite. Leur rapport est de l'ordre de 15 %. A cet acide, présent sur place, s'ajoutent au cours d'une décharge des apports par diffusion depuis l'extérieur des plaques, d'autant plus significatifs que la décharge est plus lente . Les taux d'utilisation de matière active sont les plus élevés au voisinage de la surface des plaques. Ils peuvent atteindre 60 à 70 %, à comparer à la valeur moyenne de 25 à 30 % pour l'électrode complète.

Le document FR-A-2 438 346 [1] et la publication de J. Alzieu et al, au Fifth International Electric Vehicle Symposium, Philadelphie, 2 au 5 Octobre 1978 [2], décrivent des accumulateurs au plomb ayant une durée de vie élevée. Ces accumulateurs comprennent une électrode positive, une électrode négative, un électrolyte constitué par de l'acide sulfurique, un ensemble d'éléments séparateurs disposé entre l'électrode positive et l'électrode négative et des moyens pour appliquer une pression à l'ensemble. Il est indiqué que l'application d'une pression permet notamment d'augmenter la durée de vie de ces accumulateurs au plomb.

Le document J. Electrochem. Soc., vol 130, n°11, 1983, pages 2144-2149 [3] illustre un accumulateur au plomb dans lequel on utilise pour l'électrode positive un matériau actif d'une densité de 3,9 g/cm$^3$ et un électrolyte constitué d'acide sulfurique d'une densité de 1,28 à 20°C. L'emploi de tels matériaux permet de limiter les changements de structures et de propriétés physiques du matériau actif de l'électrode positive, en vue d'améliorer sa durée de vie. Dans ce document, on applique également une pression à l'ensemble des électrodes, ce qui permet aussi de limiter les changements structuraux de l'électrode.

L'amélioration apportée par cette mise en contrainte des électrodes est intéressante, mais l'énergie massique des accumulateurs au plomb reste insuffisante par rapport aux performances que l'on souhaite obtenir.

D'autres améliorations aux accumulateurs au plomb ont été envisagées par H. Ozgun et al, Journal of Power Sources, 52, 1994, pages 159-171 [4]. Ces améliorations concernent une variation de la densité du matériau actif des électrodes. Dans ce dernier cas, les auteurs préconisent d'augmenter la densité du matériau actif afin d'augmenter l'aptitude au cyclage charge/décharge de l'accumulateur.

P.W. Appel et D.B. Edwards dans Journal of Power Sources, 55, 1995, pages 81-85 [5] ont tenté d'améliorer les performances de l'accumulateur au plomb en améliorant la conductivité du matériau actif par incorporation de particules conductrices, mais ils n'ont pas réussi à trouver de telles particules susceptibles de résister au milieu particulièrement corrosif d'une électrode positive d'accumulateur au plomb.

L'application d'une pression aux électrodes devrait permettre d'améliorer le taux d'utilisation des réactifs au sein des électrodes en utilisant des électrodes sous forme de plaques minces. En effet, on conçoit qu'une plaque mince, c'est-à-dire où tout élément de matière active est proche d'une surface limitant la plaque, présente des performances améliorées ; ceci permettrait de prétendre à un taux global d'utilisation de 60 à 70 %.

La compression permet de pallier la fragilité particulière de ces plaques minces. Après avoir envisagé cette orientation qui constitue aujourd'hui un axe de recherche affiché par le Consortium ALABC Advanced Lead Acid Battery Consortium, celle-ci a été abandonnée car des résultats expérimentaux insoupçonnés ont fait entrevoir de nouvelles perspectives.

La présente invention a précisément pour objet un accumulateur au plomb du type décrit dans les documents [1] à [3], qui présente une énergie massique améliorée grâce à des dispositions permettant d'augmenter le taux d'utilisation des matériaux actifs des électrodes en réalisant une meilleure distribution des réactifs au sein des électrodes.

**Exposé de l'invention**

La présente invention a pour objet un accumulateur au plomb comprenant :

- une électrode positive comportant de l'oxyde de plomb comme matériau actif,

- une électrode négative comportant de la mousse de plomb comme matériau actif,

- un électrolyte constitué par une solution d'acide sulfurique,

- un élément séparateur entre l'électrode positive et l'électrode négative, et

- des moyens pour appliquer une contrainte à l'ensemble perpendiculairement au plan des électrodes,

dans lequel, à l'état chargé, la quantité d'acide sulfurique dans l'électrode positive représente au moins 0,20 mole de $H_2SO_4$ par mole du matériau actif de l'électrode positive, et/ou la quantité d'acide sulfurique dans l'électrode négative représente au moins 0,20 mole de $H_2SO_4$ par mole du matériau actif de l'électrode négative.

Cette quantité d'acide sulfurique dans l'électrode positive ou négative peut représenter par exemple de 0,20 à 1 mole, ou de 0,20 à 0,70 mole de $H_2SO_4$ par mole du matériau actif de l'électrode.

De préférence, selon l'invention, dans l'accumulateur, à l'état chargé, la quantité d'acide sulfurique dans l'électrode positive représente au moins 0,25 et mieux encore 0,40 mole de $H_2SO_4$ par mole de matériau actif de l'électrode positive, et/ou la quantité d'acide sulfurique dans l'électrode négative représente au moins 0,25 et mieux encore 0,40 mole de $H_2SO_4$ par mole de matériau actif de l'électrode négative.

Dans l'accumulateur au plomb de l'invention cette meilleure distribution des réactifs au sein des électrodes peut être obtenue en adoptant une ou plusieurs des dispositions suivantes, par rapport à l'art antérieur :

- 1) modifier la structure de l'électrode positive afin d'augmenter la quantité d'acide sulfurique dans l'électrode positive,

- 2) modifier la structure de l'électrode négative afin d'augmenter la quantité d'acide sulfurique dans l'électrode négative, et

- 3) augmenter la concentration en $H_2SO_4$ de l'électrolyte.

Selon l'invention, on peut utiliser simultanément deux ou trois de ces modifications pour ajuster aux valeurs voulues les quantités d'acide sulfurique dans l'électrode positive et/ou dans l'électrode négative.

En effet, selon l'invention, on a découvert que les qualités de robustesse des accumulateurs au plomb mettant en oeuvre une compression des électrodes en exerçant sur celles-ci une contrainte de compression de l'ordre de 0,01 à 0,3 MPa, autorisaient la mise en oeuvre d'autres dispositions de nature à améliorer le coefficient d'utilisation du matériau actif de l'électrode positive alors que ces dispositions auraient été dangereuses dans une structure d'accumulateur conventionnelle.

Ces dispositions concernent en particulier :

- l'augmentation de la concentration en $H_2SO_4$ de l'électrolyte,
- l'augmentation de porosité des électrodes, et
- l'inclusion d'éléments poreux dans ces électrodes.

Aussi, selon un premier mode de réalisation de l'invention, on modifie la porosité de l'électrode positive et/ou celle de l'électrode négative. Dans ce cas, on utilise un matériau actif d'électrode ayant une densité apparente à l'état chargé sec de 2,8 à 3,2 g/cm$^3$, de préférence de 3,0 à 3,2 g/ cm$^3$.

Le fait d'augmenter la porosité du matériau actif de l'électrode positive et/ou de l'électrode négative permet d'augmenter la quantité d'acide sulfurique par mole de matériau actif et de favoriser ainsi les échanges entre le matériau actif d'électrode et l'électrolyte.

Pour obtenir un matériau actif d'électrode de porosité accrue, on peut procéder de la façon suivante.

Généralement, le matériau actif des électrodes est obtenu à partir d'une pâte d'oxyde de plomb, d'eau et d'acide sulfurique, par empâtage d'une grille servant de collecteur de courant, suivi d'un séchage, puis d'un mûrissage pendant 48 heures en atmosphère saturée de vapeur d'eau. On forme ensuite par application d'un courant électrique, sur les électrodes, le dioxyde de plomb $PbO_2$ servant de matériau actif à l'électrode positive et le plomb métallique spongieux servant de matériau actif à l'électrode négative. Dans cette fabrication, la teneur en eau et en acide de la pâte d'oxyde de plomb règle la porosité du matériau actif obtenu ensuite. Selon l'invention, il suffit donc d'ajuster la teneur en eau et en acide de la pâte pour obtenir un matériau actif présentant une densité apparente située dans la gamme mentionnée ci-dessus.

Un autre moyen d'accroître la porosité du matériau actif d'une l'électrode conforme à l'art antérieur, est de soumettre cette électrode qui comporte un matériau ayant généralement une densité apparente à l'état chargé sec de 3,3 à 3,6 g/cm$^3$, à un traitement électrique consistant en au moins une décharge profonde suivie d'une recharge.

Ceci peut être effectué en mettant un élément constitué à partir d'électrodes classiques en court-circuit, en fin de décharge, par exemple pendant 48 heures. L'effet de cette décharge profonde est de faire gonfler l'électrode positive et/ou l'électrode négative, donc d'accroître sa porosité. Toutefois, après 150 à 200 cycles de charge/décharge dans des conditions de fonctionnement normales, la porosité de l'électrode a pu diminuer et revenir à sa valeur initiale. Dans ce cas, on peut restituer cette valeur accrue de porosité en faisant subir à nouveau à l'électrode au moins un cycle de décharge profonde.

Selon un second mode de réalisation de l'invention, on modifie la structure de l'électrode positive et/ou de l'électrode négative en ajoutant des particules poreuses inertes capables de se charger d'électrolyte dans le matériau actif de ces électrodes. Ces particules poreuses peuvent être des fragments microporeux de matériau inerte tel que du polyéthylène, du polypropylène ou d'autres polymères résistant à l'électrolyte. La présence d'électrolyte dans ces particules poreuses permet ainsi d'augmenter la quantité d'électrolyte par mole de matériau actif de l'électrode. Ces particules poreuses peuvent être ajoutées à la pâte d'oxyde de plomb utilisée pour l'empâtage des grilles ou collecteurs de courant.

On peut en particulier ajouter une quantité de particules poreuses dans le matériau actif telle qu'elle représente 5 à 80 %, de préférence 10 à 50 %, du volume final du matériau de l'électrode. Ainsi, on modifie la structure du matériau actif d'électrode en augmentant sa porosité et sa teneur en électrolyte.

Selon un troisième mode de réalisation de l'invention, on ajuste la quantité d'électrolyte par mole de matériau actif des électrodes en augmentant la densité de l'électrolyte. Dans ce cas, on peut utiliser une solution de $H_2SO_4$ ayant une densité d'au moins 1,30, par exemple de 1,30 à 1,50 et de préférence de 1,32 à 1,40.

Avantageusement, ce troisième mode de réalisation est combiné avec l'un des deux modes de réalisation précédents.

D'autres caractéristiques et avantages de l'invention apparaîtront mieux à la lecture de la description qui suit d'exemples de réalisation, donnés bien entendu à titre illustratif et non limitatif, en référence aux dessins annexés.

**Brève description des figures**

La figure 1 est une vue schématique en coupe verticale d'un accumulateur au plomb dans lequel peuvent être utilisés les améliorations de l'invention.

La figure 2 est une vue en perspective de l'assemblage des électrodes positive et négative de la figure 1 avec application d'une pression à l'ensemble.

La figure 3 est une vue en perspective d'un mode de réalisation de l'électrode positive de la figure 1 disposée dans un séparateur microporeux.

La figure 4 illustre l'évolution du rayon de pore moyen de la matière active d'électrodes positives d'accumulateurs en fonction du nombre de cycles, dans le cas où l'électrode est soumise à une contrainte (courbe 1) et dans le cas où il n'y a pas de contrainte (courbe 2).

La figure 5 représente l'évolution de la capacité (en A.h) d'un accumulateur sous contrainte en fonction du nombre de cycles lorsque l'on effectue plusieurs décharges profondes des électrodes entre le 530$^{ème}$ et le 750$^{ème}$ cycle.

La figure 6 illustre l'amélioration obtenue en augmentant le rapport quantité d'électrolyte sur quantité de matériau actif, par circulation forcée d'électrolyte.

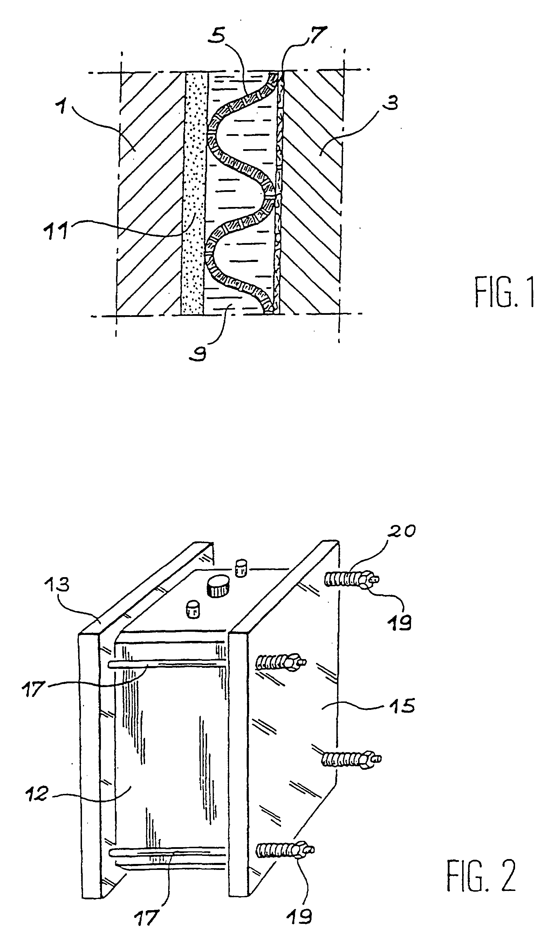

Sur la figure 1, on a représenté un accumulateur au plomb comprenant une électrode positive 1 en forme de plaque et une électrode négative 3 en forme de plaque séparées l'une de l'autre par un ensemble comprenant un élément écarteur 5 ondulé et perforé, réalisé par exemple en chlorure de polyvinyle PVC, et un élément 7 tel qu'un voile fibreux réalisé par exemple en fibres de verre. Les électrodes positive et négatives baignent dans un électrolyte 9.

Dans cet accumulateur, l'électrode positive est constituée d'oxyde de plomb $PbO_2$ recouvrant une feuille de plomb alvéolaire ou grille.

L'électrode négative 3 est semblablement constituée à partir de mousse de plomb.

De préférence selon l'invention, comme représenté sur la figure 1, l'électrode positive 1 est par ailleurs séparée de l'électrolyte 9 par un élément microporeux 11 qui peut être constitué par le produit dit Darak®, formé de pulpe de papier, de laine de verre et de résine phénolique.

Sur la figure 2, on a illustré l'accumulateur de la figure 1, complété par les moyens pour appliquer une contrainte à l'ensemble perpendiculairement au plan des électrodes 1 et 3. Dans ce cas, l'ensemble 12 est disposé entre deux flasques métalliques 13 et 15 qui sont reliés l'un à l'autre par un ensemble de tiges filetées 17 munies de boulons 19 et de ressorts tarés 20.

On peut ainsi appliquer à l'ensemble des électrode 1 et 3, une contrainte de l'ordre de 0,01 à 0,3 MPa, de préférence une contrainte de l'ordre de 0,1 MPa.

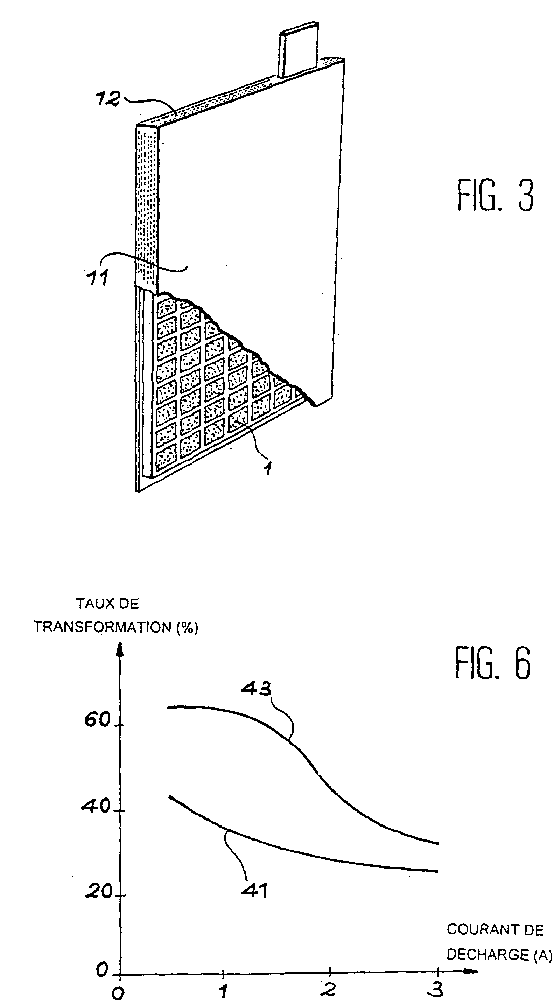

Sur la figure 3, on a représenté en perspective l'électrode positive 1 entourée du séparateur microporeux 11. Dans ce cas, ce séparateur entoure totalement l'électrode et il est formé de deux séparateurs microporeux soudés à leur périphérie, par exemple par un cordon de résine thermofusible 12.

On précise que dans l'accumulateur au plomb de l'invention, l'ensemble séparateur formé par l'élément écarteur 5 et l'élément 7 peut être remplacé par un seul élément constitué par un matelas de fibre de verre.

Selon l'invention, on améliore les performances de l'accumulateur décrit sur les figures 1 à 3, en utilisant des électrodes positive et/ou négative présentant des structures conduisant à une quantité plus élevée d'électrolyte par mole de matériau actif.

On a constaté que l'application d'une contrainte aux électrodes permet de stabiliser la porosité de l'électrode durant le cyclage.

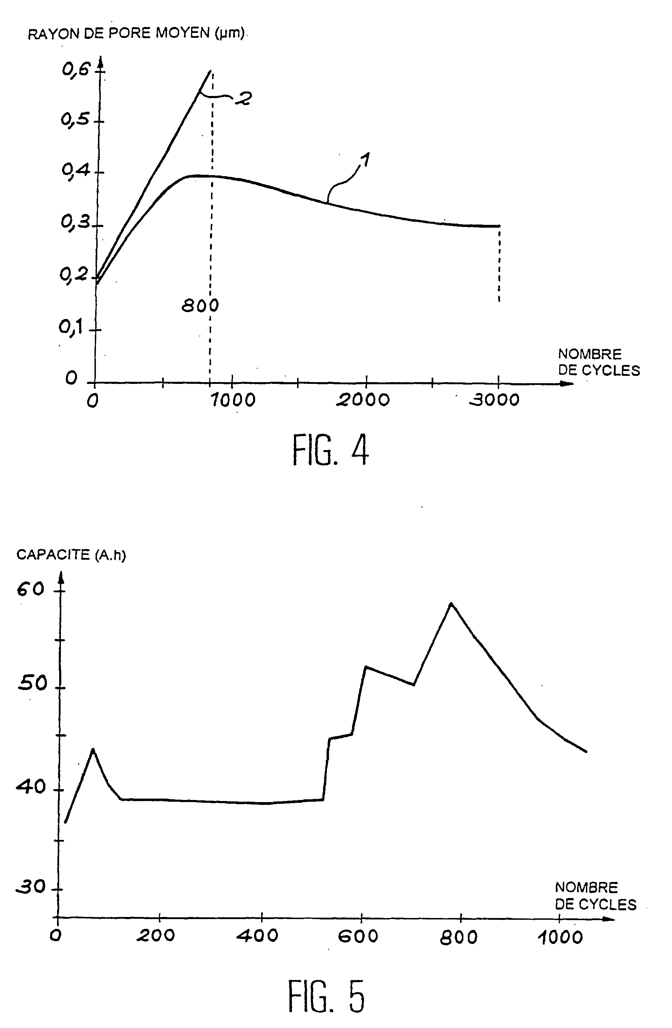

Sur la figure 4, courbe 1, on a représenté l'évolution du rayon de pore moyen (en µm) de la matière active d'une électrode positive sous contrainte en fonction du nombre de cycles effectués.

Sur cette figure, on voit que le rayon de pore moyen de l'électrode augmente tout d'abord, puis se stabilise après une légère décroissance, jusqu'à la fin de la vie de l'accumulateur (3000 cycles).

A titre comparatif, on a représenté également sur cette figure, courbe 2, l'évolution du rayon de pore moyen d'une électrode similaire utilisée dans un accumulateur sans application de contrainte. Dans ce cas, le rayon de pore moyen croît tout au long du cyclage, jusqu'à la fin de vie (environ 800 cycles).

Conformément à l'invention, grâce à l'effet de stabilisation de la porosité de l'électrode du à la contrainte, on peut augmenter de façon importante la porosité initiale de l'électrode sans nuire à la durée de vie de cette électrode.

En revanche, en l'absence de contrainte, on sait qu'une électrode présentant une porosité initiale supérieure de plus de 10 % à celle des électrodes classiques, présente une durée de vie réduite de façon inacceptable.

Selon l'invention, on peut donc améliorer les performances de l'accumulateur au plomb sous contrainte décrit ci-dessus en utilisant pour les matériaux actifs des électrodes positive et/ou négative des matériaux présentant une porosité plus élevée.

On rappelle que les électrodes positives sont généralement préparées à partir d'une pâte d'oxyde de plomb qui recouvre des feuilles de plomb alvéolaires ou grilles servant de support. Après empâtage de ces grilles, on sèche et on laisse mûrir pendant 48 heures dans une atmosphère saturée de vapeur d'eau. On forme ensuite le matériau actif $PbO_2$ par application d'un courant électrique. Le matériau actif des électrodes négatives est préparé de la même façon mais lors de l'application du courant électrique, la pâte d'oxyde de plomb est réduite en mousse de plomb.

Selon l'invention, on obtient une porosité plus élevée de ces matériaux actifs en utilisant une teneur en eau et en acide de la pâte plus élevée.

On peut aussi obtenir une porosité plus élevée du matériau actif de l'électrode en effectuant une décharge profonde de l'électrode préparée à partir d'une pâte d'oxyde de plomb de composition classique.

Sur la figure 5, on a représenté la capacité (en A.h) en fonction du nombre de cycles d'un accumulateur sous contrainte, soumis à plusieurs décharges profondes.

Le cyclage mis en oeuvre a été le suivant :

- décharge sous courant constant (11A) pendant 3 h, et
- charge sous courant constant en deux paliers :

- 1er palier : 6,65 A pendant 5h, et
- 2ème palier : 2 A pendant 4h.

Les capacités sont mesurées au cours de cycles dits de contrôle, identiques aux précédents sauf que pour la charge, le deuxième palier sous 2A est prolongé de 2 h, et que la décharge sous 11A est prolongée jusqu'à ce que la tension aux bornes de l'accumulateur atteigne 1,70 V.

Comme représenté sur la figure 5, la capacité augmente du 1er au 65ème cycle, puis elle diminue pour se stabiliser autour de 39 A.h.

Au 530ème cycle, on effectue une décharge profonde, puis une recharge et on constate que la capacité de l'accumulateur augmente jusqu'à 45 A.h, soit de 15 %.

Du 530ème au 750ème cycle, on effectue diverses décharges profondes qui se ramènent aux deux types suivants :

- décharge sous courant réduit jusqu'à chute de la tension à moins de 1 V par élément de l'accumulateur, pouvant aller jusqu'au court-circuit imposé pendant 60 h,
- succession de cycles comportant une décharge complète alors que jusqu'au 530ème cycle la décharge était interrompue au bout de 3 heures.

Ces deux types de décharges ont été expérimentés séparément et de façon combinée. Des périodes de retour au cyclage initial ont permis de vérifier que l'augmentation de capacité observée ne présentait pas de caractère fugitif. On atteint ainsi sous un courant de décharge de contrôle de 11A une capacité de 60 A.h alors que la capacité nominale pour ce courant est de 39 A.h, soit un gain global de plus de 50 %.

A partir du 750ème cycle on pratique à nouveau le cyclage défini ci-dessus. L'objectif est d'analyser, en l'absence de décharge profonde, le caractère durable ou non de l'augmentation de capacité. Après 250 cycles, c'est-à-dire au 1000ème cycle, la capacité mesurée est toujours supérieure à la capacité nominale. La décroissance semble linéaire. La pente est de 5,5 A.h pour 100 cycles.

Ce résultat est tout à fait surprenant car normalement, on aurait dû s'attendre à ce que l'accumulateur soit irrémédiablement dégradé par une décharge profonde obtenue par court-circuit prolongé.

Le fait encore plus surprenant est d'obtenir, après de nouvelles décharges profondes, une augmentation supplémentaire de la capacité de l'accumulateur pouvant dépasser un gain global de 50 %.

Ce phénomène pouvait été attribué soit à une amélioration de la conductivité de la matière active, soit à une augmentation de la porosité. Des expériences relatives à la conductivité ont conduit à éliminer l'hypothèse d'une réorganisation du squelette conducteur assurant la collection des charges au sein de la matière active et à retenir plutôt celle d'une augmentation importante de la porosité de cette matière active. Les travaux menés par la suite ont confirmé ce point de vue.

En effet, on sait que lors de la décharge de l'électrode positive, l'oxyde de plomb se transforme en sulfate de plomb selon le schéma réactionnel suivant :

$$PbO_2 + H_2 + H_2SO_4 \rightarrow PbSO_4 + 2H_2O.$$

Lors de la décharge de l'électrode négative, le plomb se transforme en sulfate de plomb selon le schéma réactionnel suivant :

$$Pb + SO_4 \rightarrow PbSO_4.$$

Or, le sulfate de plomb produit présente un volume plus élevé que l'oxyde de plomb ou le plomb d'origine.

Lorsqu'on effectue une décharge profonde, par exemple en mettant en court-circuit l'électrode en fin de décharge pendant 48 heures, et que l'on charge ensuite l'électrode, le matériau actif qui se transforme en $PbO_2$ ou Pb ne reprend pas son volume initial. On obtient donc une augmentation de porosité qui permet d'améliorer les performances de l'accumulateur.

Cette augmentation n'est pas durable car au bout d'une période de 150 à 200 cycles, le matériau actif de l'électrode peut reprendre son volume initial. Toutefois, il est possible de restaurer cette porosité plus élevée en soumettant de nouveau l'électrode à une décharge profonde comme indiqué ci-dessus.

Une autre possibilité pour augmenter la porosité du matériau actif de chacune des électrodes est d'inclure dans celui-ci des éléments poreux, par exemple des particules poreuses incorporées à la pâte d'oxyde de plomb servant à la fabrication de l'électrode.

Des particules poreuses utilisables peuvent être constituées par des particules de polyéthylène dont la plus petite dimension est au plus de 0,5 mm, de préférence d'environ 0,2 mm.

Dans la (les) électrodes, on peut utiliser une proportion de particules poreuses représentant de 2 à 50 %, de préférence de 5 à 30 % du volume final du matériau de l'électrode. Ces particules peuvent avoir une porosité de 60 à 70 % en volume, ce qui permet d'inclure dans le matériau actif une quantité supplémentaire d'électrolyte.

Selon l'invention, on peut aussi améliorer les performances de l'accumulateur décrit sur les figures 1 à 3, en utilisant un électrolyte constitué par une solution d'acide sulfurique plus concentrée ayant une densité d'au moins 1,30, par exemple de 1,30 à 1,50, et de préférence de 1,32 à 1,40.

L'emploi de densités d'acide sulfurique aussi élevées ne nuit pas à la durée de vie des accumulateurs au plomb dans lesquels, conformément à l'invention, on applique une contrainte aux électrodes positive et négative.

A titre d'exemple, un accumulateur au plomb conforme à la référence [1] ayant une capacité de 26 A. h avec un électrolyte de densité 1,28 voit cette capacité augmenter à 30 A.h avec un électrolyte de densité 1,32 et à 45 A.h avec un électrolyte de densité 1,32 après six décharges profondes.

Sur la figure 6, on a illustré l'effet bénéfique d'une quantité accrue d'électrolyte par mole de matériau actif. Cette figure 6 représente l'évolution du taux de transformation (en %) du matériau actif de l'électrode positive en fonction du courant de décharge (en ampère) pour un accumulateur au plomb conforme à la référence [1] (courbe 41) et pour un accumulateur au plomb du même type (courbe 43) dans lequel on a favorisé les échanges entre l'électrolyte et le matériau actif en réalisant une circulation forcée d'électrolyte à travers le matériau actif à une vitesse de 2 µm/s, ce qui correspond à une quantité accrue d'électrolyte par mole de matériau actif.

Sur cette figure, on voit clairement que le déficit en électrolyte est le facteur limitant en ce qui concerne le taux de transformation du matériau actif de l'électrode positive. En effet, pour un courant de décharge de 1,25 A, on augmente de 80 % ce taux de transformation avec circulation forcée de l'électrolyte, ce qui confirme l'intérêt de l'invention.

On précise que dans tous les modes de réalisation de l'invention, l'électrolyte utilisé qui est constitué par de l'acide sulfurique plus ou moins dilué, peut être sous forme gélifiée, par exemple au moyen de $SiO_2$, ou sous forme absorbée dans un matériau approprié qui peut être un matelas de microfibres de verre jouant le rôle d'écarteur ou un séparateur microporeux tels que ceux représentés en 5 et 11 sur la figure 1.

Bien que les exemples décrits ci-dessus se rapportent à un accumulateur monopolaire, il va de soi que l'invention s'applique également aux accumulateurs bipolaires.

Dans ce cas, l'électrode positive et l'électrode négative de l'accumulateur sont associées entre elles pour former des plaques bipolaires comportant sur une face le matériau actif d'électrode positive et sur l'autre face le matériau actif d'électrode négative.

En effet, en utilisant avec ces plaques bipolaires, les dispositions décrites précédemment qui permettent d'augmenter le taux d'utilisation des matériaux actifs des électrodes en réalisant une meilleure distribution des réactifs au sein des électrodes, on obtient non seulement une amélioration de la puissance massique due à la structure bipolaire, mais aussi une amélioration de l'énergie massique.

En effet, toute paroi bipolaire mène à une amélioration sensible de la puissance massique pour des appels de puissance courts. Par contre, en l'absence de disposition complémentaire, on assiste à une diminution de l'énergie massique, notamment aux régimes de décharge en 1 à 2 heures qui caractérisent le fonctionnement des véhicules électriques. Ceci est dû au fait que les électrodes, plaquées contre la paroi bipolaire, n'offrent plus qu'une face à l'électrolyte, ce qui diminue d'un facteur 2 l'apport d'espèces réactives depuis l'électrolyte extérieur aux électrodes.

La combinaison d'une amélioration du taux d'utilisation du matériau actif et de la mise en oeuvre d'une structure bipolaire permet des gains à la fois au niveau de la puissance massique et de l'énergie massique.

**Références citées.**

[1] : FR-A-2 438 346

[2] : J. Alzieu et al « Structure of lead acid batteries adjusted to fast charge ». The Fifth International Electric Vehicle Symposium Philadelphia, 25 Octobre 1978.

[3] : J. Electrochem. Soc., vol 130, n°11, Novembre 1983, page 2144-2149.

[4] : H. Ozgun et al, Journal of Power Sources 52, 1994, pages 159-171.

[5] : P. W. Appel et D.B. Edwards, Journal of Power Sources, 55, 1995, pages 81-85.

**Revendications**

1.  Accumulateur au plomb comprenant :

    - une électrode positive (1) comportant de l'oxyde de plomb comme matériau actif,
    - une électrode négative (3) comportant de la mousse de plomb comme matériau actif,
    - un électrolyte (9) constitué par une solution d'acide sulfurique,
    - un élément séparateur (5,7) entre l'électrode positive et l'électrode négative, et
    - des moyens pour appliquer une contrainte à l'ensemble perpendiculairement au plan des électrodes, dans lequel, à l'état chargé, la quantité d'acide sulfurique dans l'électrode positive représente au moins 0,20 mole de $H_2SO_4$ par mole du matériau actif de l'électrode positive, et/ou la quantité d'acide sulfurique dans l'électrode négative représente au moins 0,20 mole de $H_2SO_4$ par mole du matériau actif de l'électrode négative, et dans lequel la contrainte appliquée aux électrodes est de 0,01 à 0,3 MPa.

2.  Accumulateur selon la revendication 1, dans lequel, à l'état chargé, la quantité d'acide sulfurique dans l'électrode positive représente au moins 0,25 mol de $H_2SO_4$ par mole du matériau actif de l'électrode positive, et/ou la quantité d'acide sulfurique dans l'électrode négative représente au moins 0,25 mole de $H_2SO_4$ par mole de matériau actif de l'électrode négative.

3.  Accumulateur selon la revendication 1 ou 2, dans lequel le matériau actif de l'électrode positive a une densité apparente à l'état chargé sec de 2,8 à 3,2

g/cm$^3$.

**4.** Accumulateur selon l'une quelconque des revendications 1 à 3, dans lequel le matériau actif de l'électrode négative a une densité apparente à l'état chargé sec de 2,8 à 3,2 g/cm$^3$.

**5.** Accumulateur selon l'une quelconque des revendications 1, 2 et 4, dans lequel on utilise une électrode positive dont le matériau actif a une densité apparente à l'état chargé sec de 3,3 à 3,6 g/cm$^3$ et à laquelle on fait subir au moins une décharge profonde suivie d'une recharge pour amener sa densité apparente à l'état chargé sec à une valeur de 2,8 à 3,2 g/cm$^3$.

**6.** Accumulateur selon l'une quelconque des revendications 1 à 3, dans lequel on utilise une électrode négative dont le matériau actif a une densité apparente, à l'état chargé sec, de 3,3 à 3,6 g/cm$^3$ et à laquelle on fait subir au moins une décharge profonde suivie d'une recharge pour amener sa densité apparente à l'état chargé sec à une valeur de 2,8 à 3,2 g/cm$^3$.

**7.** Accumulateur au plomb selon l'une quelconque des revendications 1 à 6, dans lequel le matériau actif de l'électrode positive et/ou le matériau actif de l'électrode négative comprennent en outre des particules poreuses inertes capables de se charger d'électrolyte.

**8.** Accumulateur selon la revendication 7, dans lequel les particules poreuses sont en polyéthylène.

**9.** Accumulateur selon l'une quelconque des revendications 7 et 8, dans lequel la quantité de particules poreuses représente 5 à 80 % du volume final du matériau de l'électrode.

**10.** Accumulateur selon la revendication 7 ou 8, dans lequel la quantité de particules poreuses représente 10 à 50 % du volume final du matériau de l'électrode.

**11.** Accumulateur selon l'une quelconque des revendications 1 à 10, dans lequel on utilise comme électrolyte une solution d'acide sulfurique ayant une densité d'au moins 1,30.

**12.** Accumulateur selon la revendication 11, dans lequel la densité de la solution d'acide sulfurique est de 1,30 à 1,50, de préférence de 1,32 à 1,40.

**13.** Accumulateur selon l'une quelconque des revendications 1 à 12, dans lequel l'électrode positive et l'électrode négative sont associées entre elles pour former des plaques bipolaires comportant sur une face le matériau actif d'électrode positive et sur l'autre face le matériau actif d'électrode négative.

**Patentansprüche**

**1.** Bleibatterie, umfassend:

- eine positive Elektrode (1) mit Bleioxid als aktivem Material,
- eine negative Elektrode (3) mit Bleischaum als aktivem Material,
- ein Elektrolyt (9), gebildet durch eine Schwefelsäurelösung,
- ein Trennelement (5, 7) zwischen der positiven Elektrode und der negativen Elektrode, und
- Einrichtungen, um auf das Ganze eine Spannung auszuüben, senkrecht zur Ebene der Elektroden,

bei der die Schwefelsäuremenge im geladenen Zustand in der positiven Elektrode wenigstens 0,2 mol $H_2SO_4$ pro Mol des aktiven Materials der positiven Elektrode darstellt, und/oder die Schwefelsäuremenge in der negativen Elektrode wenigstens 0,20 mol $H_2SO_4$ pro Mol des aktiven Materials der negativen Elektrode darstellt, und bei dem die auf die Elektroden ausgeübte Spannung 0,01 bis 0,3 MPa beträgt.

**2.** Batterie nach Anspruch 1, bei der im geladenen Zustand die Schwefelsäuremenge in der positiven Elektrode wenigstens 0,25 mol $H_2SO_4$ pro Mol des aktiven Materials der positiven Elektrode darstellt, und/oder die Schwefelsäuremenge in der negativen Elektrode wenigstens 0,25 mol $H_2SO_4$ pro Mol des aktiven Materials der negativen Elektrode darstellt.

**3.** Batterie nach Anspruch 1 oder 2, bei der das aktive Material der positiven Elektrode im trockenen geladenen Zustand eine Rohdichte von 2,8 bis 3,2 g/cm$^3$ hat.

**4.** Batterie nach einem der Ansprüche 1 bis 3, bei der das aktive Material der negativen Elektrode im trockenen geladenen Zustand eine Rohdichte von 2,8 bis 3,2 g/cm$^3$ hat.

**5.** Batterie nach einem der Ansprüche 1, 2 und 4, bei der man eine positive Elektrode benutzt, deren aktives Material im trockenen geladenen Zustand eine Rohdichte von 3,3 bis 3,6 g/cm$^3$ hat und die man wenigstens einer gründlichen Entladung, gefolgt von einer Wiederaufladung, unterzieht, um ihre Rohdichte im trockenen geladenen Zustand auf einen Wert von 2,8 bis 3,2 g/cm$^3$ zu bringen.

**6.** Batterie nach einem der Ansprüche 1 bis 3, bei der man eine negative Elektrode benutzt, deren aktives Material im trockenen geladenen Zustand eine Rohdichte von 3,3 bis 3,6 g/cm$^3$ hat und die man wenigstens einer gründlichen Entladung, gefolgt von einer Wiederaufladung, unterzieht, um ihre Rohdichte im trockenen geladenen Zustand auf einen Wert von 2,8 bis 3,2 g/cm$^3$ zu bringen.

**7.** Bleibatterie nach einem der Ansprüche 1 bis 6, bei der das aktive Material der positiven Elektrode und/oder das aktive Material der negativen Elektrode außerdem inerte poröse Partikel enthält, die fähig sind, Elektrolyt aufzunehmen.

**8.** Batterie nach Anspruch 7, bei dem die porösen Partikel aus Polyethylen sind.

**9.** Batterie nach einem der Ansprüche 7 und 8, bei dem die Menge der porösen Partikel 5 bis 80 % des finalen Volumens des Elektrodenmaterials darstellt.

**10.** Batterie nach Anspruch 7 oder 8, bei der die Menge der porösen Partikel 10 bis 50 % des finalen Volumens des Elektrodenmaterials darstellt.

**11.** Batterie nach einem der Ansprüche 1 bis 10, bei dem man als Elektrolyt eine Schwefelsäurelösung mit einer Dichte von wenigstens 1,30 verwendet.

**12.** Batterie nach Anspruch 11, bei dem die Dichte der Schwefelsäurelösung 1,30 bis 1,50 und vorzugsweise 1,32 bis 1,40 beträgt.

**13.** Batterie nach einem der Ansprüche 1 bis 12, bei der die positive Elektrode und die negative Elektrode miteinander verbunden sind, um bipolare Platten zu bilden, die auf einer Seite das aktive Material der positiven Elektrode umfassen und auf der anderen Seite das aktive Material der negativen Elektrode.

**Claims**

**1.** Lead-acid battery comprising:

- a positive electrode (1) containing lead oxide as active material,
- a negative electrode (3) containing lead sponge as active material,
- an electrolyte (9) formed of a solution of sulphuric acid,
- a separator element (5, 7) between the positive electrode and the negative electrode, and
- means for applying a stress to the assembly perpendicular to the plane of the electrodes,

in which, in the charged state, the quantity of sulphuric acid in the positive electrode represents at least 0.20 mole of $H_2SO_4$ per mole of active material in the positive electrode, and/or the quantity of sulphuric acid in the negative electrode represents at least 0.20 mole of $H_2SO_4$ per mole of active material in the negative electrode and in which the stress applied to the electrodes is 0.01 to 0.3 MPa.

**2.** Battery according to claim 1, in which, in the charged state, the quantity of sulphuric acid in the positive electrode represents at least 0.25 mole of $H_2SO_4$ per mole of active material in the positive electrode, and/or the quantity of sulphuric acid in the negative electrode represents at least 0.25 mole of $H_2SO_4$ per mole of active material in the negative electrode.

**3.** Battery according to claim 1 or 2, in which the active material of the positive electrode has an apparent density in the dry, charged state of 2.8 to 3.2 g/cm$^3$.

**4.** Battery according to any one of claims 1 to 3, in which the active material of the negative electrode has an apparent density in the dry, charged state of 2.8 to 3.2 g/cm$^3$.

**5.** Battery according to any of claims 1, 2 and 4, in which a positive electrode is used whose active material has an apparent density in the dry, charged state of 3.3 to 3.6 g/cm$^3$ and which is caused to undergo at least one deep discharge followed by recharging to bring its apparent density in the dry, charged state to a value of 2.8 to 3.2 g/cm$^3$.

**6.** Battery according to any of claims 1 to 3, in which a negative electrode is used whose active material has an apparent density in the dry, charged state of 3.3 to 3.6 g/cm$^3$ and which is caused to undergo at least one deep discharge followed by recharging to bring its apparent density in the dry, charged state to a value of 2.8 to 3.2 g/cm$^3$.

**7.** Lead-acid battery according to any of claims 1 to 6, in which the active material of the positive electrode and/or the active material of the negative electrode also contains inert porous particles able to charge themselves with electrolyte.

**8.** Battery according to claim 7, in which the porous particles are in polyethylene.

**9.** Battery according to either of claim 7 and 8, in which the quantity of porous particles represents 5 to 80% of the final volume of electrode material.

**10.** Battery according to either of claims 7 or 8, in which the quantity of porous particles represents between 10 and 50% of the final volume of electrode material.

**11.** Battery according to any of claims 1 to 10, in which a solution of sulphuric acid is used as electrolyte having a density of at least 1.30.

**12.** Battery according to claim 11, in which the density of the sulphuric acid solution ranges from 1.30 to 1.50, preferably from 1.32 to 1.40.

**13.** Battery according to any of claims 1 to 12, in which the positive electrode and the negative electrode are associated together to form bipolar plates comprising, on one surface, the active material of the positive electrode, and on the other surface the active material of the negative electrode.

FIG. 1

FIG. 2

FIG. 3

TAUX DE
TRANSFORMATION (%)

FIG. 6

COURANT DE
DECHARGE (A)

FIG. 4

FIG. 5